# FASCICULE DE BREVET EUROPEEN

(11) **EP 2 956 029 B1**
(45) Date de publication et mention de la délivrance du brevet: **14.11.2018**
(21) Numéro de dépôt: 14704325.1
(22) Date de dépôt: 11.02.2014
(51) Int. Cl.: A45D 40/16, B29C 33/40, B29C 45/00

(54) **PROCÉDÉ DE FABRICATION D'AU MOINS UN BLOC DE PRODUIT COSMÉTIQUE, INSTALLATION ET TÉTINE ASSOCIÉES**
HERSTELLUNGSVERFAHREN EINES FESTEN KOSMETIKPRODUKTS UND ENTSPRECHENDE VORRICHTUNG UND SILIKONFORM
PROCESS FOR MANUFACTURING A BLOCK OF COSMETIC PRODUCT, CORRESPONDING APPARATUS AND SILICON MOULD

(30) Priorité: 12.02.2013 FR 1351182
(43) Date de publication de la demande: 23.12.2015
(73) Titulaire: L'Oréal, 75008 Paris (FR)
(72) Inventeur: DUVERGER, Guillaume, 75020 Paris (FR); LORENTE-GONZALES, Sonia, 94300 Vincennes (FR)
(74) Mandataire: Lavoix
(86) Numéro de dépôt international: PCT/EP2014/052593
(87) Numéro de publication internationale: WO 2014/124916

(56) Documents cités:
- EP-A1- 0 686 468
- EP-A1- 2 500 011
- WO-A1-2006/127100
- US-A1- 2008 260 981

## Description

La présente invention concerne un procédé de fabrication d'au moins un bloc de produit cosmétique selon le préambule de la revendication 1.

Le produit cosmétique est par exemple un produit cosmétique de maquillage ou de soin d'une surface corporelle d'un utilisateur, tel qu'un rouge à lèvres ou un produit de protection pour les lèvres.

Plus généralement, on entend par « produit cosmétique », un produit tel que défini dans le Règlement CE N°1223/2009 du Parlement européen et du Conseil daté du 30 novembre 2009, relatif aux produits cosmétiques.

Dans le domaine des rouges à lèvres ou des produits de soin, le bloc de produit cosmétique est généralement conditionné dans un étui. Le bloc présente une forme allongée, éventuellement effilée à son extrémité, désignée par le terme « raisin ». Il est souvent monté sur une cupule déployable hors de l'étui.

Pour fabriquer le bloc, il est connu de préparer une composition cosmétique, puis de la fluidifier en la chauffant. La composition cosmétique est alors coulée dans un moule en élastomère, aussi appelé « tétine », présentant une cavité interne de forme complémentaire à celle souhaitée pour le bloc.

La tétine est alors refroidie pour permettre la solidification du bloc. Puis, la tétine et écartée de la surface du bloc, par exemple en la déformant par mise sous vide. La cupule est alors mise en place. L'ensemble formé du bloc et de la cupule est extrait pour être introduit dans l'étui.

FR 2 720 659, FR 2 700 448, EP 2 500 011, EP 0 686 468 ou WO 2004/100705 décrivent des procédés du type précité.

Ces procédés ne donnent pas entière satisfaction. En effet, dans le domaine cosmétique, l'apparence du produit après fabrication revêt une importance capitale. En particulier, dans le domaine des rouges à lèvres, il est souhaité que le bloc présente une brillance élevée à des fins esthétiques.

Cependant, dans certains cas, la nature de la tétine et le démoulage nuit à la brillance du bloc obtenu.

Un but de l'invention est d'obtenir un procédé de fabrication d'un bloc de produit cosmétique coulé, qui permette d'obtenir de manière simple un produit cosmétique d'aspect esthétique très satisfaisant, en particulier en terme de brillance.

À cet effet, l'invention a pour objet un procédé selon la revendication 1.

Le procédé selon l'invention peut comprendre l'une ou plusieurs des caractéristiques des revendications 2 à 7 ou la caractéristique suivante :
- le mélange du premier précurseur et du deuxième précurseur est inapte à réticuler à une température inférieure à 50 °C.

L'invention a également pour objet une installation selon la revendication 8.

L'installation selon l'invention peut comprendre l'une ou plusieurs des caractéristiques des revendications 9 à 11.

L'invention a aussi pour objet une tétine selon la revendication 12.

La tétine selon l'invention peut comprendre l'une ou plusieurs des caractéristiques des revendications 13 à 15.

L'invention sera mieux comprise à la lecture de la description qui va suivre, donnée uniquement à titre d'exemple, et faite en se référant aux dessins annexés, sur lesquels :
- les figures 1 à 4 illustrent schématiquement une première installation de fabrication d'un bloc de produit cosmétique selon l'invention, lors des différentes étapes d'un procédé de fabrication du bloc ;
- la figure 5 est une vue de face, prise en coupe partielle, d'une tétine de formation du bloc selon l'invention ;
- la figure 6 est une vue schématique d'un dispositif de moulage de la tétine de la figure 5 ;
- la figure 7 est une vue de face d'un bloc de produit cosmétique obtenu par le procédé selon l'invention ;
- la figure 8 est un graphe illustrant les résultats d'un test de brillance réalisé sur des échantillons obtenus à l'aide du procédé selon l'invention et sur des échantillons comparatifs.

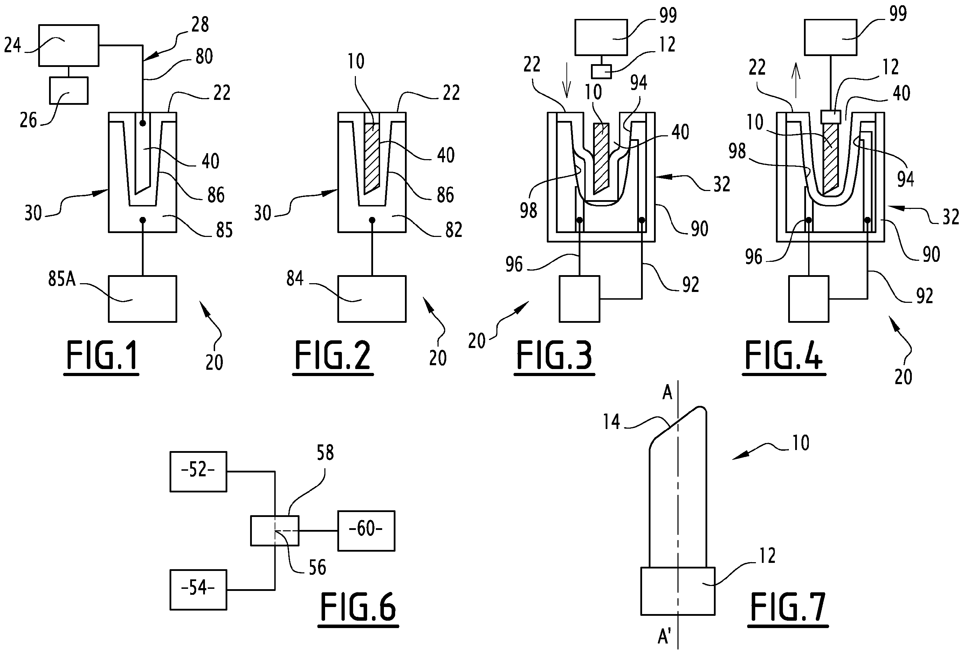

Un bloc 10 de produit cosmétique obtenu par un procédé selon l'invention est illustré par la figure 7. Sur cette figure, le bloc 10 est monté sur un organe de support 12, tel qu'une cupule.

Le produit cosmétique est par exemple un produit cosmétique de maquillage ou de soin d'une surface corporelle d'un utilisateur, tel qu'un rouge à lèvres ou un produit de protection pour les lèvres.

Le bloc 10 présente une forme allongée suivant un axe vertical A-A'. Il présente une extrémité libre 14 effilée.

Le bloc 10 est solide à température ambiante, par exemple à 25 °C. Il est cependant apte à se déliter ou à se fluidifier au contact de la surface corporelle d'un utilisateur.

Le bloc 10 est fabriqué par un premier procédé selon l'invention, à partir d'une composition cosmétique propre à être coulée. La composition cosmétique est solide à température ambiante. Elle est apte à se fluidifier par chauffage, par exemple une température supérieure à 50 °C, notamment supérieure à 80 °C.

Le premier procédé selon l'invention est mis en oeuvre dans une installation 20, illustrée schématiquement sur les figures 1 à 5.

Sur ces figures, l'installation 20 est représentée dans le cadre de la fabrication d'un bloc 10. En pratique, l'installation 20 est apte à fabriquer une grande quantité de blocs 10 simultanément, par duplication des équipements représentés sur les figures 1 à 5.

Comme illustré sur ces figures, et selon l'invention, l'installation 20 comporte au moins une tétine 22 réalisée en élastomère de silicone liquide ou «LSR», destinée à la formation d'un bloc 10.

L'installation 20 comporte en outre un réservoir 24 de composition cosmétique, et un ensemble 26 de chauffage de la composition cosmétique pour fluidifier cette composition.

L'installation 20 comprend également un ensemble 28 de coulage de la composition fluidifiée pour l'amener dans la tétine 22, et un ensemble 30 de modification de la température de la tétine 22.

En référence aux figures 3 et 4, l'installation 20 comporte de plus un ensemble 32 de démoulage du bloc 10 à l'écart de la tétine 22.

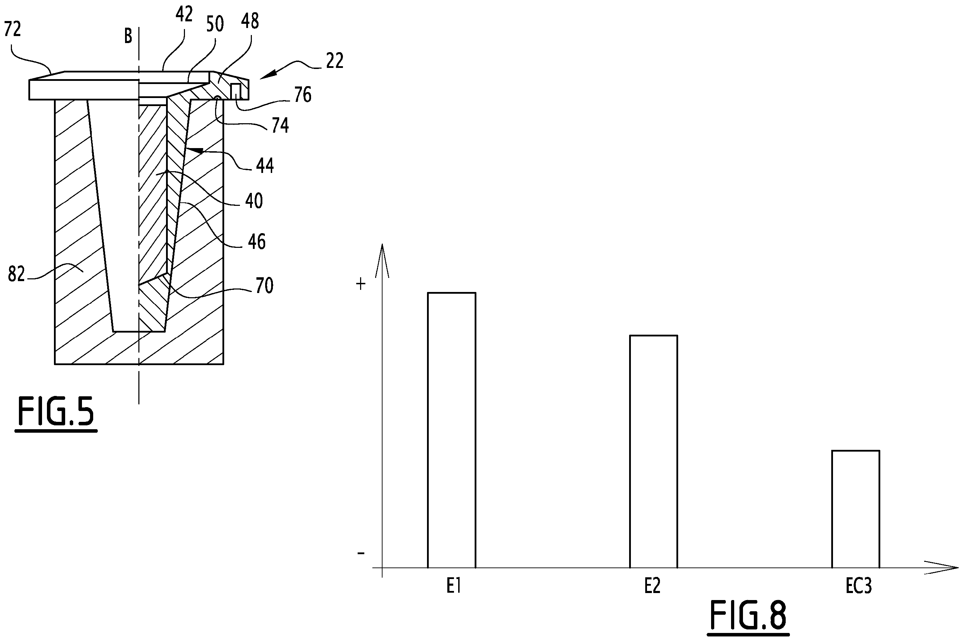

Comme illustré par la figure 5, la tétine 22 délimite une cavité interne 40 de moulage du bloc 10, présentant une forme complémentaire à celle du bloc 10. La cavité interne 40 débouche vers le haut par une ouverture 42 d'introduction de composition cosmétique.

La tétine 22 comporte ainsi une paroi 44 déformable en élastomère de silicone liquide, la paroi comportant un fût 46 délimitant la cavité 40, une collerette extérieure 48 d'appui située autour de l'ouverture 42, et dans l'exemple illustré par la figure 5, une paroi intermédiaire 50 de liaison entre le fût 46 et la collerette extérieure 48.

La paroi 44 est réalisée d'un seul tenant en étant venue de matière. Elle est par exemple obtenue par un procédé de moulage par injection d'un élastomère de silicone liquide.

En référence à la figure 6, l'élastomère de silicone liquide est par exemple formé par le mélange 56, dans un mélangeur 58, d'un premier précurseur 52 comportant un polysiloxane comprenant au moins un groupe aliphatique insaturé, de préférence au moins un groupe vinyle, avec un deuxième précurseur 54 comportant un métal de transition, tel que du platine, et comportant un agent réticulant, notamment un polysiloxane dépourvu de groupes insaturés.

Le mélange 56 est par exemple réalisé avec les proportions massiques 1 pour 1 de premier précurseur 52 et de deuxième précurseur 54.

Il présente une viscosité faible, notamment une viscosité, mesurée à 20 °C par la norme DIN 53 018, inférieure à 500 Pa.s, notamment inférieure à 400 Pa.s, et avantageusement comprise entre 250 Pa.s et 350 Pa.s.

Le mélange 56 est inapte à réticuler à température ambiante, notamment à une température inférieure à 50 °C.

Ce mélange 56 présente donc une forme fluide ou pâteuse. Il est apte à être pompé jusqu'à un moule 60 d'injection, présentant une empreinte de moulage de forme complémentaire à la tétine 22. L'empreinte de moulage de la tétine est réalisée dans un moule en acier trempé, et présente une finition de type « poli miroir ». Le mélange 56 est propre à être chauffé dans le moule 60 à une température supérieure à 150 °C, notamment comprise entre 180 °C et 200 °C pour amocer la réticulation de l'élastomère.

La pression d'injection dans le moule 60 est par exemple supérieure à 50 bars. Avantageusement, la pression d'injection dans le moule 60 est comprise entre 50 bars et 150 bars.

La réticulation s'effectue par réaction chimique d'addition entre les groupes vinyle du polysiloxane compris dans le premier précurseur 52 et l'agent réticulant contenu dans le deuxième précurseur 54, en présence du métal de transition, pour créer des liaisons covalentes entre les chaînes individuelles de polysiloxane.

La réticulation est rapide, le temps de séjour dans le moule 60 est compris entre trois secondes et dix secondes, notamment entre cinq secondes et six secondes par millimètre d'épaisseur de paroi 44.

La réticulation n'engendre donc aucun sous-produit, contrairement à la réticulation aux peroxydes ou au soufre.

Contrairement aux silicones de type RTV, aucune réticulation n'intervient à température ambiante. Par suite, il est possible de pomper chacun des précurseurs 52, 54, puis le mélange 56 jusqu'au moule 60 sans démarrer la réaction de réticulation, en maintenant le mélange 56 à une température comprise avantageusement entre 15 °C et 25 °C.

La réticulation dans le moule 60 est généralement suivie d'un post-traitement par chauffage, par exemple dans un four, à une température supérieure à 150 °C, notamment supérieure à 180 °C pendant une durée supérieure à1 heure, notamment comprise entre 3 heures et 5 heures.

L'élastomère de silicone liquide formant la paroi 44 est particulièrement avantageux. Il présente une bonne adhérence directe sur différents types d'inserts, une faible reprise d'humidité et une résistance à de nombreux solvants, et souvent une très bonne résistance aux huiles.

Cet élastomère est en outre résistant à l'impact et est très hydrophobe.

De préférence, l'élastomère de silicone liquide formant la paroi 44 présente une densité comprise entre 1,0 g/cm³ et 1,2 g/cm³, telle que mesurée par la norme DIN 53 479 A.

Il présente une résistance à la traction comprise entre 5 N/mm² et 10 N/mm², notamment entre 7 N/mm² et 9 N/nm², mesurée par la norme DIN 53 504 S2. Il présente de préférence une élongation à la rupture supérieure à 500 %, notamment supérieure à 600 %, et avantageusement comprise entre 600 % et 900 %, telle que mesurée par la norme DIN 53 504 S2.

L'élastomère de silicone liquide formant la paroi 44 possède en outre une résistance à la déchirure élevée, notamment supérieure à 30 N/mm, et notamment comprise entre 32 N/mm et 37 N/mm, telle que mesurée par la norme ASTM D 624 Die B.

Il présente en outre une compression rémanente avantageusement comprise entre 10 % et 20 %, telle que mesurée par la norme ISO 815.

L'élastomère de silicone liquide formant la paroi 44 présente une dureté comprise entre 10 Shore A et 50 Shore A, notamment entre 30 Shore A et 40 Shore A.

Un exemple d'élastomère de silicone liquide pouvant être utilisé pour former la paroi 44 est le Silopren LSR 2630 commercialisé par la société MOMENTIVE.

En référence à la figure 5, le fût 46 présente avantageusement une surface extérieure 70 tronconique.

L'épaisseur de la paroi 44 diminue donc en se déplaçant depuis l'ouverture 42 vers le fond de la cavité 40, le long d'un axe B-B' de la cavité 40. L'épaisseur minimale de la paroi 44, prise perpendiculairement à l'axe B-B', est avantageusement comprise entre 2,0 mm et 0,5 mm. L'épaisseur maximale de la paroi 44, prise perpendiculairement à l'axe B-B', est avantageusement comprise entre 5,0 mm et 2,0 mm, au voisinage de la collerette 48.

La collerette 48 s'étend transversalement par rapport à l'axe B-B'. Elle présente une surface supérieure 72 inclinée vers le fût 46 en se déplaçant à l'écart de l'axe B-B'.

L'épaisseur minimale de la collerette 48, prise le long de l'axe B-B', est par exemple comprise entre 2,0 mm et 1,0 mm. L'épaisseur maximale de la collerette 48, prise le long de l'axe B-B', est par exemple comprise entre 6,0 mm et 2,0 mm.

La collerette 48 présente avantageusement une rainure annulaire 74 s'étendant autour du fût 46 et débouchant vers le fût 46. Elle présente un orifice 76 extérieur.

La rainure 74 permet le maintien de la tétine 22 sur un support lors de l'application d'un vide pour démouler deux régions successives de la tétine 22.

La rainure 74 présente une épaisseur comprise entre 1 mm et 3 mm. Elle dispose d'un côté plat dans la même direction que l'axe B-B' et d'un côté incliné d'environ 60° mesuré par rapport à la perpendiculaire à l'axe B-B'.

L'orifice 76 coïncide avec un pion d'orientation de la tétine 22 dans l'installation 20.

La paroi intermédiaire 50 est inclinée par rapport à l'axe B-B' d'un angle compris entre 60° et 90°. Elle présente une épaisseur croisante en se déplaçant transversalement par rapport à l'axe B-B', à l'écart de l'axe B-B'.

L'épaisseur minimale de la paroi 50, prise le long de l'axe B-B' est par exemple comprise entre 2,0 mm et 1,0 mm. L'épaisseur maximale de la paroi 50, prise le long de l'axe B-B', est par exemple comprise entre 5,0 mm et 2,0 mm.

En référence à la figure 1, l'ensemble de chauffage 26 est propre à chauffer la composition cosmétique contenue dans le réservoir 24 à une température supérieure à 50 °C pour la fluidifier.

L'ensemble de coulage 28 comporte au moins une tubulure 80 propre à injecter la composition cosmétique fluidifiée dans la cavité 40 de chaque tétine 22.

L'ensemble 30 de modification de la température comporte, pour chaque tétine 22, un réceptacle 82 de refroidissement de la tétine 22, et un circuit 84 de de refroidissement du réceptacle 82, visibles sur la figure 2.

L'ensemble 30 de régulation thermique comporte en outre avantageusement un réceptacle 85 de préchauffage de chaque tétine 22, associé à un circuit 85A de préchauffage de la tétine 22, visible sur la figure 1.

En variante, l'ensemble 30 de régulation thermique comporte un dispositif de soufflage de gaz chaud ou des halogènes permettant un chauffage sans contact de chaque tétine 22.

Chaque réceptacle 82, 85 délimite un logement 86 de réception du fût 46 de la tétine 22, avantageusement de forme complémentaire au fût 46. Ainsi, le réceptacle 82, 85 est propre à venir en contact avec la surface extérieure 70 du fût 46 pour chauffer et/ou refroidir par contact la tétine 22.

Le circuit de préchauffage 85 est propre, avant l'injection de la composition cosmétique dans la cavité 40, à éventuellement préchauffer la tétine 22 à une température supérieure à 10 ° C, avantageusement comprise entre 10 °C et 35 °C.

Le circuit de refroidissement 84 est propre, après l'injection de la composition cosmétique dans la cavité 40, à refroidir la tétine 22 à une température inférieure à 0 °C, notamment inférieure à -10 °C, notamment comprise entre -15 °C et -25 °C, pour provoquer la solidification de la composition cosmétique et la formation du bloc 10.

Le circuit 84 comporte un fluide caloporteur composé par exemple d'un mélange d'eau et de glycol refroidi par un groupe froid.

En référence à la figure 3 et à la figure 4, l'ensemble de démoulage 32 comporte une enceinte de démoulage 90, un premier circuit 92 de mise en dépression d'une région supérieure 94 de l'enceinte 90, et un deuxième circuit 96 de mise en dépression d'une région inférieure 98 de l'enceinte 90.

Le premier circuit 92 est propre à être activé pour aspirer une région supérieure du fût 46 et de la paroi intermédiaire 50 pour les déformer radialement à l'écart de l'axe B-B' et les écarter d'une partie supérieure du bloc 10 de produit cosmétique.

Le deuxième circuit 96 est propre à être activé pour aspirer une région inférieure du fût 46 et la déformer radialement à l'écart de l'axe B-B' pour l'écarter d'une partie inférieure du bloc 10 de produit cosmétique.

Avantageusement, dans l'exemple représenté sur la figure 3, l'ensemble de démoulage 32 comporte en outre un appareil 99 de mise en place de l'organe de support 12 sur le bloc 10, et d'extraction de l'ensemble formé par l'organe de support 12 et le bloc 10.

Un premier procédé de fabrication d'au moins un bloc 10, mise en oeuvre dans l'installation 20 selon l'invention va maintenant être décrit.

Initialement, la composition cosmétique contenue dans le réservoir 24 est chauffée par l'ensemble de chauffage 26 pour être fluidifiée. La température de chauffage de la composition est supérieure à 50 °C, et est notamment comprise entre 90 °C et 110 °C.

La composition fluidifiée est sous forme liquide. Elle est avantageusement agitée afin d'éviter la sédimentation et la génération de bulles d'air.

Dans un mode de réalisation particulier, chaque tétine 22 est introduite dans un réceptacle 85 de préchauffage pour y être chauffée par le circuit de préchauffage 85A, avantageusement à une température supérieure à 10 °C et notamment comprise entre 10 °C et 35 °C pendant un temps supérieur à 30 seconds, et compris par exemple entre 40 secondes et 80 secondes.

En variante, aucun pré-chauffage de la tétine 22 n'est effectué.

L'ensemble de coulage 24 est alors activé. La composition cosmétique fluidifiée est coulée dans la cavité 40 de la tétine 22 à travers la tubulure 28.

La tétine 22 est alors déplacée dans le logement 86 d'au moins un réceptacle 82 de refroidissement pour y être refroidie à une température inférieure à 0 °C, notamment inférieure à -10 °C, et de préférence comprise ente -15 °C et -25 °C.

De préférence, la tétine 22 est amenée successivement dans les logements 86 respectifs d'une pluralité de réceptacles 82 de refroidissement.

Le temps de refroidissement de chaque tétine 22 dans un ou plusieurs réceptacles 82 est au total supérieur à 100 secondes, et notamment compris entre 200 secondes et 400 secondes.

En référence à la figure 3, chaque tétine 22 est ensuite introduite dans une enceinte 90 de démoulage. Le premier circuit 92 de mise en dépression est alors activé. Une région supérieure du fût 46 et la paroi intermédiaire 50 se déforment de manière élastique à l'écart de l'axe B-B' pour se plaquer contre la région supérieure 94 de l'enceinte 90, à l'écart d'une partie supérieure du bloc 10. Une région inférieure du fût 46 reste plaquée contre le bloc 10.

La partie supérieure du bloc 10 est alors découverte. L'appareil 99 est ensuite activé pour amener l'organe de support 12 au contact de la partie supérieure du bloc 10 et pour solidariser l'organe de support 12 au bloc 10.

Comme illustré sur la figure 4, le deuxième circuit 94 de mise en dépression est ensuite activé. La région inférieure du fût 46 se déforme alors de manière élastique à l'écart de l'axe B-B' pour venir se plaquer contre la région inférieure 98 de l'enceinte 90.

L'ensemble formé par le bloc 10 et par l'organe de support 12 solidarisé avec le bloc 10 est alors extrait hors de la cavité 40, en vue de son conditionnement ultérieur.

D'une manière surprenante, la mise en oeuvre du procédé selon l'invention, et notamment l'utilisation d'une tétine 22 en élastomère de silicone liquide, permet d'obtenir des blocs 10 de produit cosmétique qui présentent un aspect esthétique particulièrement satisfaisant, notamment en terme de brillance.

Cet effet est obtenu de manière aisée et à moindre coût, dans une installation 20 de structure simple.

Pour illustrer l'effet de brillance obtenu, des exemples de préparation de blocs 10 à l'aide du procédé selon l'invention, et des exemples comparatifs vont maintenant être décrits.

### Exemple E1

Dans cet exemple, la composition cosmétique suivante est préparée dans le réservoir 24.

| Nom | % en poids | Phase |
|---|---|---|
| Huile de castor hydrogénée dimère dilinolétate (Risocast DA-L) | 13,02 | B |
| Triglycéride caprilique/caprique (TCG-M) | 27,9 | A |
| Squalane (olive Squalane) | 14,42 | A |
| Huile de castor hydrogénée Isostéarate (Risocast MIS) | 9,3 | A |
| Malate de Diisostéaryle | 9,3 | A |
| Cire microcristalline | 6,51 | C |
| Céresine (Ceresin 810) | 4,65 | C |
| Polyglyceryl 2-isostéarate | 4,65 | A |
| Cire de polyéthylène | 3,26 | C |
| Pigment Yellow 5 lake | 0,85 | D |
| Pigment Blue one lake | 0,2 | D |
| Pigment Red 7 | 0,47 | D |
| Dioxyde de titane | 2,3 | D |
| Oxyde de fer rouge | 0,76 | D |
| Oxyde de fer jaune | 0,21 | D |
| mica | 2,2 | E |

La phase D (pigments) est broyée à la tricylindre avec une partie de la phase A (de telle sorte que la masse de phase D soit de l'ordre du 1/3 de la phase A).

On fait chauffer les ingrédients restants (soient les 2/3 restants de la phase A et la phase C) dans un poêlon, à 98°C, et on rajoute le mélange de la phase D et de la partie de la phase A ainsi que la phase E.

On fait tout fondre pendant 30 minutes environ. Dans cet exemple, les tétines 22 ne sont pas préchauffées.

Une masse de 4,0 g à 5,0 g de composition est alors coulée dans chaque cavité 40 d'une tétine 22.

La tétine 22 est ensuite introduite successivement dans plusieurs réceptacles 82 de refroidissement, pour y être refroidie à une température inférieure à -10°C , pendant un temps total environ égal à 300 secondes. La composition cosmétique contenue dans la cavité 40 se solidifie alors pour former un bloc 10.

Ceci étant fait, le haut du bloc 10 est réchauffé pour fondre la cheminée, avant de passer dans l'enceinte de démoulage 90.

Chaque tétine 22 est ensuite placée dans une enceinte de démoulage 90. Le premier circuit de mise sous vide 92 est activé à une pression de 0,8 bars, pour permettre de découvrir la partie supérieure du bloc 10 en aspirant la région supérieure du fût 46 contre la région supérieure 94 de l'enceinte 90.

Un organe de support 12 formé par une cupule est alors embouti sur l'embase du bloc 10.

Puis, le deuxième circuit de mise sous vide 94 est activé à une pression de 0,7 bars pour découvrir la partie inférieure du bloc 10. Le bloc 10 et l'organe de support 12 sont alors extraits hors de la cavité 40.

### Exemple E2

Le procédé décrit dans l'exemple E1 est reproduit avec la même composition en refroidissant la tétine à une température supérieure à 0 °C. Dans ce procédé, un préchauffage des tétines 22 à 100 °C pendant 60 secondes est appliqué, avant de couler la composition cosmétique.

### Exemple comparatif EC3

Le procédé décrit dans l'exemple E1 est reproduit avec la même composition en utilisant une tétine 22 réalisée à base d'un élastomère de silicone réticulé aux peroxydes.

### Test de mesure de la brillance

Pour évaluer la brillance, le test suivant est mis en place. Les échantillons à tester sont tous désignés par un numéro différent.

Un panel comportant entre 10 et 13 évaluateurs est rassemblé.

Deux échantillons de référence sont fournis à chaque évaluateur : un échantillon de référence mat auquel est attribué une note de 0 points et un autre échantillon de référence brillant auquel est attribué une note de 10 points.

L'évaluateur note chaque échantillon à tester sur la base des deux échantillons de référence présentés au préalable.

Les notes peuvent dépasser les valeurs des échantillons de référence, par exemple un échantillon très brillant peut dépasser les 10 points.

L'ensemble des notes de chaque évaluateur sont reportées dans un tableau et une moyenne est faite sur les échantillons notés par le panel. Une analyse de la dispersion de résultats (variance) est faite pour vérifier la pertinence du classement final.

Les résultats du test sont reportés sur le graphe de la figure 8, qui présente en abscisse la référence du test et en ordonnée, le degré de brillance obtenu, du plus vers le moins.

Comme visible sur la figure 8, l'utilisation du procédé selon l'invention, et notamment d'une tétine 22 en élastomère de silicone liquide conduit à l'obtention de blocs 10 présentant une brillance significativement améliorée (exemples E1 et E2) par rapport à ceux formés dans une tétine 22 en silicone classique (exemple comparatif EC3).

De plus, le refroidissement de la tétine 22 à une température significativement négative augmente encore la note de brillance obtenue (exemple E1), d'une manière particulièrement surprenante.

D'une manière surprenante, les élastomères de silicone liquides permettent d'obtenir des propriétés particulières de brillance contrairement à d'autres types différents de silicones, tels que les silicones RTV qui véhiculent à des températures très inférieures à 150°C, ou aux EVC qui contiennent du fluor. Au contraire, l'élastomère de silicone liquide est dépourvu de fluor.

La présence de fluor dans les EVC offre une meilleure résistance aux huiles, solvants, etc, des compositions cosmétiques, mais repulse les huiles coulées et rend les raisins mats, quelle que soit l'état de surface interne de la tétine et quel que soit le procédé appliqué même à froid.

L'élastomère de silicone liquide résout ces difficultés, tout en fournissant des raisins très brillants en surface.

En variante, la tétine réalisée en élastomère de silicone liquide (LSR) est obtenue à partir du produit Elastosil LR3003/20 TR A/B commercialisé par la société WACKER.

L'élastomère de silicone liquide présente une plage d'utilisation en température comprise entre -55°C et 210°C, une dureté compriseentre 10 Shore A et 30 Shore A notamment 20 Shore A, mesurée selon la norme DIN 53505, une densité comprise entre 1,0 g/cm³, et 1,2 g/cm³ notamment 1,08 g/cm³, mesurée selon la norme ISO 1183-1A, une viscosité avant réticulation inférieure à 500 Pa.s avantageusement compris entre 230 Pa.s et 320 Pa.s, mesurée selon la norme DIN 53019 à un taux de cisaillement de 0,9 s⁻¹, une résistance à la traction comprise entre 7 N/mm² et 9 N/mm² avantageusement 8 N/mm², mesurée selon la norme DIN 53504 S1, une élongation à la rupture supérieure 600% et avantageusement comprise entre 700% et 1000%, mesurée selon la norme DIN 53504 S1, une résistance à la déchirure comprise entre 24 N/mm et avantageusement 26 N/mm, une compression rémanente comprise entre 10% et 20%, avantageusement 18%, mesurée selon la norme DIN ISO 815 B à 175°C pendant 22h.

Avantageusement, le moule 60 est réalisé en acier trempé et présente un état de surface élaboré par une finition manuelle et un polissage électrolytique pour obtenir une rugosité ayant un écart moyen arithmétique du profil (Ra) inférieur à 0,2 et avantageusement inférieur ou égal à 0,1.

## Revendications

1. Procédé de fabrication d'au moins un bloc (10) de produit cosmétique, comprenant les étapes suivantes :
- chauffage d'une composition cosmétique pour fluidifier la composition ;
- coulage de la composition cosmétique fluidifiée dans une cavité (40) d'au moins une tétine (22) en élastomère ;
- refroidissement de la composition cosmétique dans la tétine (22) pour former le bloc (10) ;
- démoulage du bloc (10) hors de la cavité (40) ;
dans lequel la tétine (22) est réalisée en élastomère de silicone liquide.

2. Procédé selon la revendication 1, dans lequel la tétine (22) en élastomère de silicone liquide est susceptible d'être obtenue par un procédé d'injection d'un mélange (56) d'un premier précurseur (52) comprenant un polysiloxane muni de groupements aliphatiques insaturés avec un deuxième précurseur (54) comprenant un agent de réticulation et un métal de transition tel que du platine, l'injection étant réalisée dans un moule (60) chauffé à une température supérieure à 100 °C, avantageusement à une pression supérieure à 50 bar, le procédé d'injection comprenant la réticulation du polysiloxane en présence du métal de transition.

3. Procédé selon la revendication 2, dans lequel le mélange (56) de précurseurs présente, avant réticulation, une viscosité, mesurée à 20 °C par la norme DIN 53018, inférieure à 500 Pa.s, notamment inférieure à 400 Pa.s.

4. Procédé selon l'une quelconque des revendications précédentes, dans lequel l'étape de refroidissement comporte l'application à la tétine (22) d'une température inférieure à 0°C, avantageusement inférieure à -10°C.

5. Procédé selon l'une quelconque des revendications précédentes, dans lequel l'étape de démoulage comporte un retrait partiel de la tétine (22) à l'écart d'une partie supérieure du bloc (10), la fixation d'un organe de support (12) du bloc (10) sur la partie supérieure découverte du bloc (10), puis le retrait total de la tétine (22) à l'écart du bloc (10).

6. Procédé selon l'une quelconque des revendications précédentes, dans lequel l'étape de démoulage comporte la mise en place de la tétine (22) dans une enceinte de démoulage (90), puis l'écartement au moins partiel de la tétine (22) du bloc (10), par aspiration d'au moins une région de la tétine (22) contre l'enceinte de démoulage (90).

7. Procédé selon l'une quelconque des revendications précédentes, dans lequel l'élastomère de silicone liquide de la tétine (22) présente une résistance à la déchirure supérieure à 30 N/mm, telle que mesurée par la norme ASTM D 624 Die B.

8. Installation (20) de fabrication d'au moins un bloc (10) de produit cosmétique, comprenant:
- un ensemble (26) de chauffage d'une composition cosmétique ;
- au moins une tétine (22) en élastomère présentant une cavité (40) ;
- un ensemble (28) de coulage de la composition cosmétique dans la cavité (40) ;
- un ensemble (82, 84) de refroidissement de la composition dans la tétine (22) pour former le bloc ;
- un ensemble (32) de démoulage du bloc (10) hors de la cavité (40),
dans lequel la tétine (22) est réalisée en élastomère de silicone liquide.

9. Installation (20) selon la revendications 8, dans laquelle la tétine (22) en élastomère de silicone liquide est susceptible d'être obtenue par un procédé d'injection d'un mélange (56) d'un premier précurseur (52) comprenant un polysiloxane muni de groupements aliphatiques insaturés avec un deuxième précurseur (54) comprenant un agent de réticulation et un métal de transition tel que du platine, l'injection étant réalisée dans un moule (60) chauffé à une température supérieure à 100 °C, avantageusement à une pression supérieure à 50 bar, le procédé d'injection comprenant la réticulation du polysiloxane en présence du métal de transition.

10. Installation (20) selon la revendication 9, dans laquelle le mélange (56) de précurseurs présente, avant réticulation, une viscosité, mesurée à 20 °C par la norme DIN 53018 inférieure à 500 Pa.s, notamment inférieure à 400 Pa.s.

11. Installation (20) selon l'une quelconque des revendications 8 à 10, dans laquelle l'élastomère de silicone liquide de la tétine (22) présente une résistance à la déchirure supérieure à 30 N/mm, telle que mesurée par la norme ASTM D 624 Die B.

12. Tétine (22) de formation d'un bloc (10) de produit cosmétique, comprenant une paroi (44) en élastomère délimitant une cavité (40) de coulage d'une composition cosmétique, dans laquelle la paroi (44) est réalisée en élastomère de silicone liquide.

13. Tétine selon la revendication 12 susceptible d'être obtenue par un procédé d'injection d'un mélange (56) d'un premier précurseur (52) comprenant un polysiloxane muni de groupements aliphatiques insaturés avec un deuxième précurseur (54) comprenant un agent de réticulation et un métal de transition tel que du platine, l'injection étant réalisée dans un moule (60) chauffé à une température supérieure à 100°C, avantageusement à une pression supérieure à 50 bar, le procédé d'injection comprenant la réticulation du polysiloxane en présence du métal de transition.

14. Tétine selon la revendication 13, dans laquelle le mélange (56) de précurseurs présente, avant réticulation, une viscosité, mesurée à 20 °C par la norme DIN 53018 inférieure à 500 Pa.s, notamment inférieure à 400 Pa.s.

15. Tétine (22) selon l'une quelconque des revendications 12 à 14, dans laquelle l'élastomère de silicone liquide de la paroi (44) présente une résistance à la déchirure supérieure à 30 N/mm, telle que mesurée par la norme ASTM D 624 Die B.

## Patentansprüche

1. Verfahren zur Herstellung wenigstens eines Blocks (10) eines kosmetischen Produkts, aufweisend die folgenden Schritte:
- Erwärmen einer kosmetischen Zusammensetzung zum Verflüssigen der Zusammensetzung,
- Gießen der verflüssigten kosmetischen Zusammensetzung in eine Kavität (40) wenigstens einer Muffe (22) aus Elastomer,
- Abkühlen der kosmetischen Zusammensetzung in der Muffe (22) zum Bilden des Blocks (10),
- Herausnehmen des Blocks (10) aus der Kavität (40),
wobei die Muffe (22) aus einem Flüssigsilikon-Elastomer realisiert ist.

2. Verfahren gemäß Anspruch 1, wobei die Muffe (22) aus Flüssigsilikon-Elastomer geeignet ist, um erhalten zu werden durch ein Verfahren des Einspritzens einer Mischung (56) eines ersten Ausgangsstoffs (52), der ein Polysiloxan aufweist, das mit ungesättigten aliphatischen Gruppen versehen ist, mit einem zweiten Ausgangsstoff (54), der ein Vernetzungsmittel und ein Übergangsmetall, wie Platin, aufweist, wobei das Einspritzen realisiert wird in einer Form (60), die auf eine Temperatur von größer als 100 °C erwärmt ist, vorteilhaft bei einem Druck von größer als 50 bar, wobei das Einspritzverfahren aufweist das Vernetzen des Polysiloxans in Anwesenheit von dem Übergangsmetall.

3. Verfahren gemäß Anspruch 2, wobei die Mischung (56) der Ausgangsstoffe, vor der Vernetzung, eine Viskosität, gemessen bei 20°C nach der Norm DIN 53018, von kleiner als 500Pa.s, insbesondere von kleiner als 400 Pa.s, hat.

4. Verfahren gemäß irgendeinem der vorhergehenden Ansprüche, wobei der Schritt des Abkühlens aufweist die Anwendung einer Temperatur von kleiner als 0°C, vorteilhaft von kleiner als -10°C, auf die Muffe (22).

5. Verfahren gemäß irgendeinem der vorhergehenden Ansprüche, wobei der Schritt des Herausnehmens aufweist ein teilweises Zurücknehmen der Muffe (22) weg von einem oberen Abschnitt des Blocks (10), das Fixieren eines Organs zum Halten (12) des Blocks (10) an dem freiliegenden oberen Abschnitt des Blocks (10) und dann das komplette Zurücknehmen der Muffe (22) weg von dem Block (10).

6. Verfahren gemäß irgendeinem der vorhergehenden Ansprüche, wobei der Schritt des Herausnehmens aufweist, das Anordnen der Muffe (22) in einem Herausnahme-Behälter (90), dann das wenigstens teilweise Entfernen der Muffe (22) von dem Block (10) durch Ansaugen wenigstens eines Bereichs der Muffe (22) gegen den Herausnahme-Behälter (90).

7. Verfahren gemäß irgendeinem der vorhergehenden Ansprüche, wobei der Flüssigsilikon-Elastomer der Muffe (22) eine Reißfestigkeit von größer als 30 N/mm hat, wie gemessen nach der Norm ASTM D 624 Die B.

8. Anlage (20) zur Herstellung wenigstens eines Blocks (10) eines kosmetischen Produkts, aufweisend:
- eine Einrichtung (26) zum Erwärmen einer kosmetischen Zusammensetzung,
- wenigstens eine Muffe (22) aus Elastomer, die eine Kavität (40) hat,
- eine Einrichtung (28) zum Gießen der kosmetischen Zusammensetzung in die Kavität (40),
- eine Einrichtung (82, 84) zum Abkühlen der Zusammensetzung in der Muffe (22) zum Bilden des Blocks,
- eine Einrichtung (32) zum Herausnehmen des Blocks (10) aus der Kavität (40),
wobei die Muffe (22) aus einem Flüssigsilikon-Elastomer realisiert ist.

9. Anlage (20) gemäß Anspruch 8, wobei die Muffe (22) aus Flüssigsilikon-Elastomer geeignet ist, um erhalten zu werden durch ein Verfahren zum Einspritzen einer Mischung (56) eines ersten Ausgangsstoffs (52), der ein Polysiloxan aufweist, das mit ungesättigten aliphatischen Gruppen versehen ist, mit einem zweiten Ausgangsstoff (54), der ein Vernetzungsmittel und ein Übergangsmetall, wie Platin, aufweist, wobei das Einspritzen realisiert wird in einer Form (60), die auf eine Temperatur von größer als 100°C erwärmt ist, vorteilhaft bei einem Druck von größer als 50 bar, wobei das Verfahren zum Einspritzen aufweist das Vernetzen des Polysiloxans in Anwesenheit von dem Übergangsmetall.

10. Anlage (20) gemäß Anspruch 9, wobei die Mischung (56) der Ausgangsstoffe, vor der Vernetzung, eine Viskosität, gemessen bei 20°C nach der Norm DIN 53018, von kleiner als 500Pa.s, insbesondere von kleiner als 400 Pa.s., hat.

11. Anlage (20) gemäß irgendeinem der Ansprüche 8 bis 10, wobei der Flüssigsilikon-Elastomer der Muffe (22) eine Reißfestigkeit von größer als 30 N/mm hat, wie gemessen nach der Norm ASTM D 624 Die B.

12. Muffe (22) zur Bildung eines Blocks (10) eines kosmetischen Produkts, aufweisend eine Wand (44) aus Elastomer, die eine Kavität (40) zum Gießen einer kosmetischen Zusammensetzung begrenzt, wobei die Wand (44) realisiert ist aus Flüssigsilikon-Elastomer.

13. Muffe gemäß Anspruch 12, die geeignet ist, um erhalten zu werden durch ein Verfahren zum Einspritzen einer Mischung (56) eines ersten Ausgangsstoffs (52), der ein Polysiloxan aufweist, das mit ungesättigten aliphatischen Gruppen versehen ist, mit einem zweiten Ausgangsstoff (54), der ein Vernetzungsmittel und ein Übergangsmetall, wie Platin, aufweist, wobei das Einspritzen realisiert wird in einer Form (60), die auf eine Temperatur von größer als 100°C erwärmt ist, vorteilhaft bei einem Druck von größer als 50 bar, wobei das Einspritzverfahren aufweist das Vernetzen des Polysiloxans in Anwesenheit von dem Übergangsmetall.

14. Muffe gemäß Anspruch 13, wobei die Mischung (56) der Ausgangsstoffe, vor der Vernetzung, eine Viskosität, gemessen bei 20°C nach der Norm DIN 53018, von kleiner als 500 Pa.s, insbesondere von kleiner als 400 Pa.s., hat.

15. Muffe (22) gemäß irgendeinem der Ansprüche 12 bis 14, wobei der Flüssigsilikon-Elastomer der Wand (44) eine Reißfestigkeit von größer als 30 N/mm hat, wie gemessen nach der Norm ASTM D 624 Die B.

## Claims

1. Method for producing at least one block (10) of cosmetic product, comprising the following steps:
- heating a cosmetic composition in order to fluidify the composition;
- pouring the fluidified cosmetic composition into a cavity (40) of at least one teat (22) made of elastomer;
- cooling the cosmetic composition in the teat (22) to form the block (10);
- demoulding the block (10) from the cavity (40);
wherein the teat (22) is made of liquid silicone elastomer.

2. Method according to claim 1, wherein the teat (22) made of liquid silicone elastomer is obtainable by a process of injecting a mixture (56) of a first precursor (52) comprising a polysiloxane having unsaturated aliphatic groups with a second precursor (54) comprising a crosslinking agent and a transition metal such as platinum, the injection being carried out in a mould (60) heated to a temperature greater than 100°C, advantageously at a pressure greater than 50 bar, the injection process comprising crosslinking of the polysiloxane in the presence of the transition metal.

3. Method according to claim 2, wherein, prior to crosslinking, the mixture (56) of precursors has a viscosity, measured at 20°C by standard DIN 53018, lower than 500 Pa.s, especially lower than 400 Pa.s.

4. Method according to any one of the preceding claims, wherein the cooling step comprises applying a temperature below 0°C, advantageously below -10°C, to the teat (22).

5. Method according to any one of the preceding claims, wherein the demoulding step comprises withdrawing part of the teat (22) away from an upper portion of the block (10), fixing a support member (12) for the block (10) to the uncovered upper portion of the block (10), and then withdrawing the teat (22) away from the block (10) completely.

6. Method according to any one of the preceding claims, wherein the demoulding step comprises placing the teat (22) in a demoulding vessel (90) and then at least partially separating the teat (22) from the block (10) by sucking at least a region of the teat (22) against the demoulding vessel (90).

7. Method according to any one of the preceding claims, wherein the liquid silicone elastomer of the teat (22) has a tear resistance greater than 30 N/mm, as measured by standard ASTM D 624 Die B.

8. Arrangement (20) for producing at least one block (10) of cosmetic product, comprising:
- a unit (26) for heating a cosmetic composition;
- at least one teat (22) made of elastomer and having a cavity (40);
- a unit (28) for pouring the cosmetic composition into the cavity (40);
- a unit (82, 84) for cooling the composition in the teat (22) to form the block;
- a unit (32) for demoulding the block (10) from the cavity (40);
wherein the teat (22) is made of liquid silicone elastomer.

9. Arrangement (20) according to claim 8, wherein the teat (22) made of liquid silicone elastomer is obtainable by a process of injecting a mixture (56) of a first precursor (52) comprising a polysiloxane having unsaturated aliphatic groups with a second precursor (54) comprising a crosslinking agent and a transition metal such as platinum, the injection being carried out in a mould (60) heated to a temperature greater than 100°C, advantageously at a pressure greater than 50 bar, the injection process comprising crosslinking the polysiloxane in the presence of the transition metal.

10. Arrangement (20) according to claim 9, wherein, prior to crosslinking, the mixture (56) of precursors has a viscosity, measured at 20°C by standard DIN 53018, below 500 Pa.s, especially below 400 Pa.s

11. Arrangement (20) according to any one of claims 8 to 10, wherein the liquid silicone elastomer of the teat (22) has a tear resistance greater than 30 N/mm, as measured by standard ASTM D 624 Die B.

12. Teat (22) for forming a block (10) of cosmetic product, comprising a wall (44) made of elastomer which delimits a cavity (40) into which a cosmetic composition is poured, wherein the wall (44) is made of liquid silicone elastomer.

13. Teat according to claim 12, obtainable by a process of injecting a mixture (56) of a first precursor (52) comprising a polysiloxane having unsaturated aliphatic groups with a second precursor (54) comprising a crosslinking agent and a transition metal such as platinum, the injection being carried out in a mould (60) heated to a temperature greater than 100°C, advantageously at a pressure greater than 50 bar, the injection process comprising crosslinking the polysiloxane in the presence of the transition metal.

14. Teat according to claim 13, wherein, prior to crosslinking, the mixture (56) of precursors has a viscosity, measured at 20°C by standard DIN 53018, below 500 Pa.s, especially below 400 Pa.s

15. Teat (22) according to any one of claims 12 to 14, wherein the liquid silicone elastomer of the wall (44) has a tear resistance greater than 30 N/mm, as measured by standard ASTM D 624 Die B.
